# EUROPÄISCHE PATENTANMELDUNG

(11) **EP 1 126 485 A2**
(43) Veröffentlichungstag der Anmeldung: **22.08.2001**
(21) Anmeldenummer: 01102928.7
(22) Anmeldetag: 08.02.2001
(51) Int. Cl.: H01H 47/00

(54) **Schnellstoppschaltkreis**

(30) Priorität: 17.02.2000 US 507098
(71) Anmelder: DEERE & COMPANY, Moline, Illinois 61265-8098 (US)
(72) Erfinder: Johnson, Stanley Jerome, Cedar Falls, IA 50613 (US); Essmann, Kenneth Julius Jr., Waterloo, IA 50701 (US); Sablan, Sammy John, Cedar Falls, IA 50613 (US)
(74) Vertreter: Holst, Sönke, Dr.

(57) **Zusammenfassung**

Die Erfindung bezieht sich auf einen Schnellstoppschaltkreis (30) für einen elektrisch gesteuerten Schnellstoppmechanismus (11), mit einem Aktor des Schnellstoppmechanismus (11), der elektrisch zwischen einer Schnellstoppposition und einer Betriebsposition bewegbar ist, einem vorzugsweise manuell zwischen einer Ruheposition und einer Schnellstoppposition verbringbaren ersten Schalter (66) und einem zweiten Schalter (58, 64), der abhängig vom Zustand des ersten Schalters (66) zwischen einer Ruheposition und einer Schnellstoppposition verbringbar ist, wobei der Schnellstoppschaltkreis (30) zur Steuerung des Aktors eingerichtet ist und den Aktor in die Schnellstoppposition verbringt als Reaktion auf einen Übergang des ersten Schalters (66) in die Schnellstoppposition und als Reaktion auf einen Übergang des zweiten Schalters (58, 64) in die Schnellstoppposition.

## Beschreibung

Die Erfindung betrifft einen Schnellstoppschaltkreis für einen elektrisch gesteuerten Schnellstoppmechanismus, mit einem Aktor des Schnellstoppmechanismus, der elektrisch zwischen einer Schnellstoppposition und einer Betriebsposition bewegbar ist, und einem vorzugsweise manuell zwischen einer Ruheposition und einer Schnellstoppposition verbringbaren ersten Schalter.

Feldhäcksler der gegenwärtigen Produktionsreihen weisen rotierende Zuführwalzen und einen Schnellstoppmechanismus für die Zuführwalzen auf, der eine Sperrklinke umfasst, welche durch eine Feder zum Eingriff in ein Ratschenrad der Zuführwalzen vorgespannt ist und die während des normalen Betriebs der Maschine durch einen Elektromagneten vom Ratschenrad fortgezogen wird. Damit die Zuführwalzen drehen können, muss einer Haltespule des Elektromagneten zugeführt werden und eine Zugspule des Elektromagneten muss kurzzeitig angesteuert werden, um den Elektromagneten zu betätigen. Wenn der Elektromagnet unter Strom steht, zieht er die Sperrklinke vom Ratschenrad weg und ermöglicht es somit den Zuführwalzen zu drehen. Es handelt sich im Hinblick auf elektrische Fehler um ein fehlersicheres System, da die Feder die Sperrklinke mit dem Ratschenrad im Eingriff hält und die Zuführwalzen angehalten werden, wenn die elektrische Energieversorgung des Elektromagneten aus ist. Derartige Systeme sind in der Regel mit einem Schnellstoppschalter ausgestattet, der zum Anhalten der Zuführwalzen verwendet wird, wenn ein Problem auftritt. Ein bekannter Feldhäcksler aus der Produktion der Fa. John Deere hat ein Schnellanhaltesystem, in dem ein normalerweise geschlossener "NC"-Schnellanhalteschalter (NC = engl. normally closed, d.h. normalerweise geschlossen) mit Steuerrelais des Elektromagneten in Serie geschaltet ist, so dass der Elektromagnet stromlos geschaltet wird, wenn der NC-Schalter geöffnet wird. Bei einem einzigen NC-Schalter kann das System ein Öffnen des NC-Schalters nicht erkennen, wenn ein Kurzschluss zwischen den zum NC-Schalter führenden Drähten vorliegt.

Ein bekannter Mähdrescher aus der Produktion von John Deere hat einen normalerweise offenen "NO"-Schnellanhalteschalter (NO = engl. normally open, d.h. normalerweise offen), dessen Status von einer auf einem Mikroprozessor basierenden Steuereinheit abgefragt wird. Als Antwort auf ein Schließen des NO-Schnellanhalteschalters stoppt die Steuereinheit die Funktion der Entladeschneckenförderereinheit und die Eingriffseinheit des Vorsatzes. Bei einem derartigen NO-Schalter kann das System ein Schließen des NO-Schalters nicht erkennen, wenn eine Unterbrechung in einem der zum NO-Schalter führenden Drähte vorliegt.

Das der Erfindung zugrunde liegende Problem wird darin gesehen, ein Schnellstoppsystem zu schaffen, das auch bei Kurzschlussbedingungen oder Unterbrechungsbedingungen noch ordnungsgemäß funktionieren kann.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt einen Schnellstoppschaltkreis für einen Schnellstoppmechanismus vor. Der Schnellstoppschaltkreis ist mit einem elektrisch betriebenen Aktor gekoppelt und umfasst einen zweifachen Schnellstoppschalter, welcher zwei Schalter aufweist, die gleichzeitig betätigt werden. Sobald mindestens einer der Schalter in die Schnellstoppposition verbracht wird, was in der Regel manuell durch eine Bedienungsperson geschieht, aber auch durch einen mechanischen Fühler oder dergleichen erfolgen kann, veranlasst der Schnellstoppschaltkreis, dass der Aktor in die Schnellstoppposition verbracht wird. In der Schnellstoppposition ist der Aktor aus Gründen der Fehlersicherheit vorzugsweise stromlos geschaltet, da er diese dann auch im Falle eines Ausfalls der Stromversorgung annimmt. Der Aktor kann den Schnellstoppmechanismus elektromechanisch betätigen, d.h. insbesondere als Elektromagnet oder -motor gestaltet sein, oder eine Hilfskraft, wie Druckluft oder eine Hydraulikflüssigkeit, steuern.

Auf diese Weise erreicht man, dass die Fehlersicherheit durch die Einbringung des redundanten zweiten Schalters vergrößert wird.

Der erste Schalter kann den zweiten Schalter elektromechanisch steuern, indem der erste Schalter die Steuerspule eines den zweiten Schalter enthaltenden Relais steuert. Auch die Verwendung eines elektronischen Relais oder ähnlichen Schaltkreises wäre denkbar.

Alternativ ist der zweite Schalter mit dem ersten Schalter mechanisch gekoppelt. Dabei ist es besonders vorteilhaft, wenn der erste Schalter normalerweise offen und der zweite Schalter normalerweise geschlossen ist (bzw. umgekehrt). Dadurch ist bei einem Kurzschluss bzw. einer Unterbrechung aller zu den Schaltern führenden Drähte der Aktor in der Schnellstoppposition, so dass keine Schäden an der Maschine durch eine nicht funktionierende Schnellstoppeinrichtung möglich sind.

Denkbar wäre es auch, insgesamt drei Schalter vorzusehen, von denen der erste und dritte mechanisch gekoppelt sind, und ein zweiter vom ersten Schalter elektrisch bzw. elektromechanisch gesteuert wird. Diese drei Schalter werden zur Steuerung des Aktors herangezogen.

Eine elektronische Steuereinheit kann vorgesehen werden, welche mit Informationen über die Positionen der genannten Schalter versorgt wird. Sie kann den Aktor direkt oder unter Zwischenschaltung eines Relais steuern, wobei auch eine Treibereinheit zwischen die Steuerschaltung und das Relais geschaltet sein kann. Der zweite (oder auch der erste) Schalter kann in der Schnellstoppposition die Stromversorgung der Treibereinheit aus- (bzw. ein-) schalten, so dass das Relais derart angesteuert wird, dass der Aktor die Schnellstoppposition einnimmt. Zusätzlich oder alternativ kann bei dieser Ausführungsform die Steuerschaltung die Stellung des die Stromversorgung der Treibereinheit steuernden Schalters überwachen und ggf. einen Übergang des Aktors in die Schnellstoppposition veranlassen. Dadurch wird die Fehlersicherheit weiter vergrößert.

Die Erfindung eignet sich insbesondere für landwirtschaftliche Fahrzeuge, die mit einer Schnellstoppeinrichtung auszurüstende Funktionselemente aufweisen. Sie kann aber auch an Baumaschinen Verwendung finden.

In den Zeichnungen ist ein nachfolgend näher beschriebenes Ausführungsbeispiel der Erfindung dargestellt. Es zeigt:
- Fig. 1: eine schematische Ansicht eines erfindungsgemäßen Schnellstoppschaltkreises; und
- Fig. 2 und 3: logische Flussdiagramme von Algorithmen, die von Steuereinheiten der Figur 1 ausgeführt werden.

Ein Feldhäcksler weist eine rotierende Zuführwalze 10 und einen elektrisch betätigten Schnellstoppmechanismus 11 auf, der ein Ratschenrad 12 und eine Stopklinke 14 umfasst, die durch eine Feder 16 zum Eingriff mit dem Ratschenrad 12 vorgespannt ist und während des normalen Betriebs der Maschine durch einen Elektromagneten 18 vom Ratschenrad 12 hinfort gezogen wird. Der Elektromagnet 18 umfasst eine Haltespule 20 und eine Zugspule 22. Damit die Zuführwalze 10 rotieren kann, muss die Haltespule 20 mit Strom beaufschlagt werden und die Zugspule 22 muss mit einem Stromimpuls versorgt werden, um den Elektromagneten 18 zu betätigen. Wenn der Elektromagnet 18 betätigt oder angehoben wird, zieht er die Sperrklinke 14 vom Ratschenrad 12 weg, was der Zuführwalze 10 ermöglicht, zu drehen. Es handelt sich um ein fehlersicheres System, da die Feder 16 die Klinke 14 im Eingriff mit dem Ratschenrad 12 hält und die Zuführwalze 10 angehalten wird, wenn die elektrische Energieversorgung des Elektromagneten 18 aus ist.

Ein Schnellstoppschaltkreis 30 steuert die Beaufschlagung des Elektromagneten 18 des Schnellstoppmechanismus 11. Der Schnellstoppschaltkreis 30 ist in seinem Betriebszustand dargestellt, in dem er mit elektrischer Energie beaufschlagt ist; das heißt, der Zündschalter (nicht gezeigt) ist an und die Maschine im Betrieb. Der Elektromagnet umfasst ein bewegliches Element (in der Regel ein Eisenkern) 32, das durch die Zugspule 20 und die Haltespule 22 bewegbar ist. Die Beaufschlagung der Zugspule 20 wird durch ein Zugspulenrelais 30 gesteuert, das einen zwischen der Zugspule 20 und +12 Volt angeschlossenen, mittels einer Relaisspule 42 gesteuerten Relaisschalter 40 umfasst. Die Beaufschlagung der Haltespule 22 wird durch ein Haltespulenrelais 44 gesteuert, das einen zwischen der Haltespule 22 und +12 Volt angeschlossenen, durch eine Relaisspule 48 gesteuerten Relaisschalter 48 aufweist.

Eine Treibereinheit 50, wie z.B. ein plusseitiger Leistungsschalter oder -treiber, der kommerziell z.B. von Siemens erhältlich ist, steuert die Beaufschlagung des Relais 38, und eine Treibereinheit 52 steuert die Beaufschlagung des Relais 44. Die Treibereinheit 50 ist an der 12 Volt-Spannungsquelle angeschlossen und empfängt ein Abschaltesignal von einer auf einem Mikroprozessor basierenden Steuereinheit 54. Die Treibereinheit 52 ist über ein Schnellstopprelais 56 an der 12 Volt-Quelle angeschlossen und empfängt ebenfalls ein Abschaltesignal von der Steuereinheit 54. Die Funktionen der Steuereinheit 54 und der weiter unten beschriebenen Schalterstatusüberwachungseinheit 70 könnten an Stelle der getrennten Einheiten, wie sie gezeigt sind, in einer einzigen (nicht gezeigten) Steuereinheit kombiniert werden.

Ein Schnellstopprelais 56 umfasst einen Relaisschalter 58, der zwischen +12 Volt und der Treibereinheit 52 angeschlossen ist und von einer Relaisspule 60 gesteuert wird. Die Steuereinheit 54 empfängt ein Leistungsstatussignal, d. h. ein Signal über den Status des Relais 56, über eine Diode D1.

Eine doppelte Stopschaltereinheit 62 umfasst einen normalerweise offenen Schalter 64 und einen normalerweise geschlossenen Schalter 66. Der normalerweise offene Schalter 64 umfasst einen ersten Kontakt 68, der mit einer Schalterstatusüberwachungseinheit 70 verbunden ist, einen zweiten Kontakt 72, der mit +12 Volt verbunden ist und ein Schaltelement 74. Der normalerweise geschlossene Schalter 66 umfasst einen ersten Kontakt 72, der mit +12 Volt verbunden ist (es handelt sich hier auch um einen Kontakt des Schalters 64), einen zweiten Kontakt 78, der mit der Schalterstatusüberwachungseinheit 70 und der Relaisspule 60 des Schnellstopprelais 56 verbunden ist und ein Schaltelement 80. Die Schaltelemente sind mechanisch mit einem gemeinsamen Schaltelement 82 gekoppelt, so dass der normalerweise offene Schalter 64 schließt, während der normalerweise geschlossene Schalter 66 gleichzeitig öffnet, wenn das Schaltelement 82 betätigt wird. Der normalerweise geschlossene Schalter 66 kann im Sinne der Terminologie der Patentansprüche als erster Schalter angesehen werden, der normalerweise geschlossene Schalter 64 als zweiter bzw. dritter Schalter und der Relaisschalter 58 als zweiter Schalter.

Es handelt sich um ein fehlersicheres System. Wenn die Spannungsversorgung aus ist, ist die Sperrklinke 14 unten und die Zuführwalze 10 wird angehalten. Damit die Zuführwalze 10 sich bewegen kann, muss die Haltespule 22 mit Strom beaufschlagt werden, und ein Impuls muss an die Zugspule 20 angelegt werden, um den Elektromagneten 18 anzuheben. Wenn der Elektromagnet 18 angehoben wird, entfernt er die Sperrklinke 14 aus dem Ratschenrad 12, was der Zuführwalze 10 ein Drehen erlaubt.

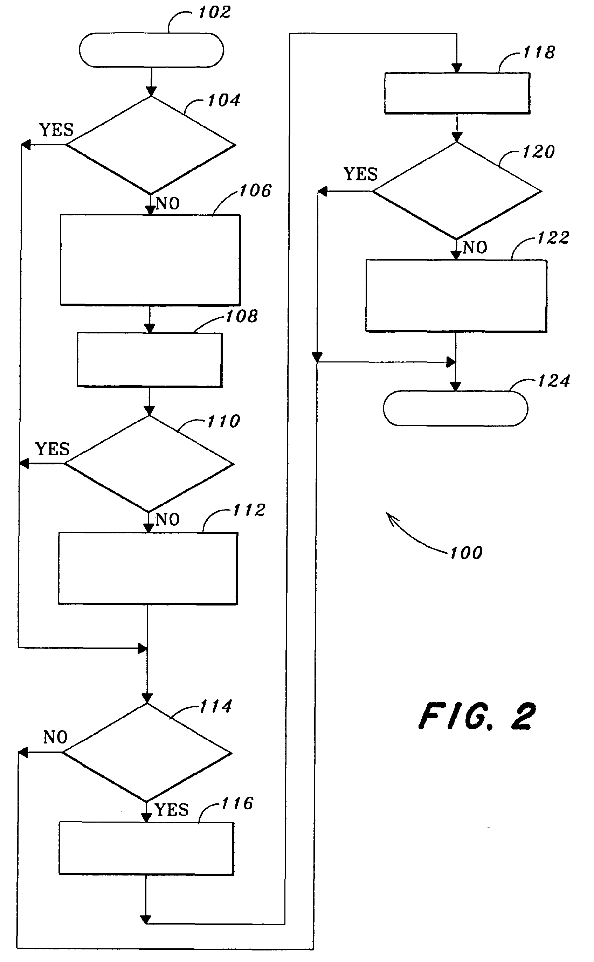

Die Schalterstatusüberwachungseinheit 70 führt einen in Figur 2 wiedergegebenen Algorithmus 100 aus. Der Algorithmus 100 beginnt bei Schritt 102. Schritt 104 führt die Steuerung zu Schritt 114, wenn der normalerweise offene Schalter 64 offen ist, sonst zu Schritt 106. Schritt 106 übersendet eine Schnellstoppbotschaft an die Steuereinheit 54. Der Schritt 108 hält den Betrieb für 50 Millisekunden an.

Schritt 110 führt die Steuerung zu Schritt 114, wenn der normalerweise geschlossene Schalter 66 offen ist, sonst zu Schritt 112, der einen Schnellstoppschalterfehlercode überträgt.

Schritt 114 führt die Steuerung zu Schritt 116, wenn der normalerweise geschlossene Schalter 66 offen ist, sonst zu Schritt 124. Schritt 116 überträgt eine Schnellstoppbotschaft zur Steuereinheit 54. Schritt 118 hält den Betrieb für 500 Millisekunden an. Schritt 120 führt die Steuerung zu Schritt 124 wenn der normalerweise offene Schalter 64 offen ist, sonst zu Schritt 122, der einen Schnellstoppschalterfehlercode überträgt. Bei Schritt 124 wird der Algorithmus 100 verlassen.

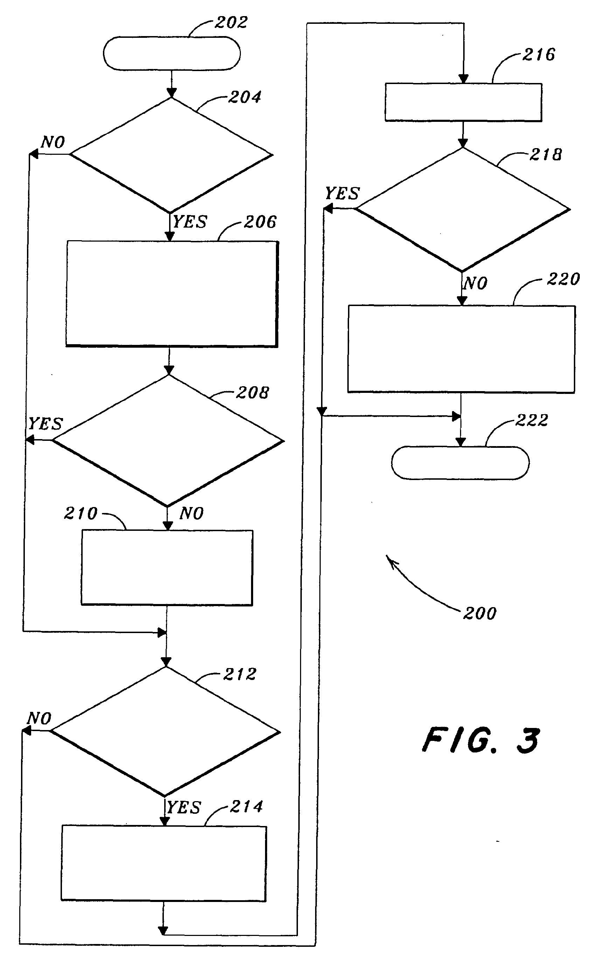

Die Steuereinheit 54 führt einen Algorithmus 200 aus, wie er in Figur 3 wiedergegeben ist. Der Algorithmus 200 beginnt mit Schritt 202. Schritt 204 führt die Steuerung zu Schritt 206, wenn eine Schnellstoppbotschaft von der Schalterstatuskontrolleinheit 70 empfangen wurde, sonst zu Schritt 212. Schritt 206 setzt einen Schnellstoppmoduswert und erzeugt einen Spulenabschaltungsbefehl, der die Treibereinheiten 50 und 52 veranlasst, die Relaisspulen 42 und 48 abzuschalten, so dass der Elektromagnet 18 nicht mehr beaufschlagt wird, woraufhin die Sperrklinke 14 in das Ratschenrad 12 eingreifen und die Zuführwalze 10 anhalten wird.

Schritt 208 führt die Steuerung zu Schritt 212, wenn das Leistungsstatussignal anzeigt, dass das Schnellstopprelais 56 offen ist, sonst zu Schritt 210. Schritt 210 übermittelt einen Schnellstoppfehlercode.

Schritt 212 führt die Steuerung zu Schritt 214, wenn das Leistungsstatussignal anzeigt, dass das Schnellstopprelais 56 offen ist, anderenfalls zu Schritt 222.

Schritt 214 setzt wie Schritt 206 einen Schnellstoppmoduswert und erzeugt einen Elektromagnetenabschaltebefehl, der die Treibereinheiten 50 und 52 veranlasst, die Relaisspulen 42 und 48 abzuschalten, wodurch der Elektromagnet 18 abgeschaltet wird, so dass die Sperrklinke 14 in das Ratschenrad 12 eingreifen und die Zuführwalze 10 anhalten wird. Der Schritt 216 hält den Betrieb für 50 Millisekunden an. Schritt 218 führt die Steuerung zu Schritt 222, wenn eine Schnellstoppbotschaft empfangen wurde, sonst zu Schritt 220, der einen Schnellstoppkommunikationsfehlercode übermittelt. Bei Schritt 222 wird der Algorithmus 200 verlassen.

Die Umsetzung der obigen Flussdiagramme in eine Standardsprache zur Implementierung des in den Flussdiagrammen beschriebenen Algorithmus auf einem Digitalcomputer oder einem Mikroprozessor ist jedem Fachmann unproblematisch möglich. Die Funktionen der Algorithmen 100 und 200 könnten durch eine einzige Steuereinheit ausgeführt werden.

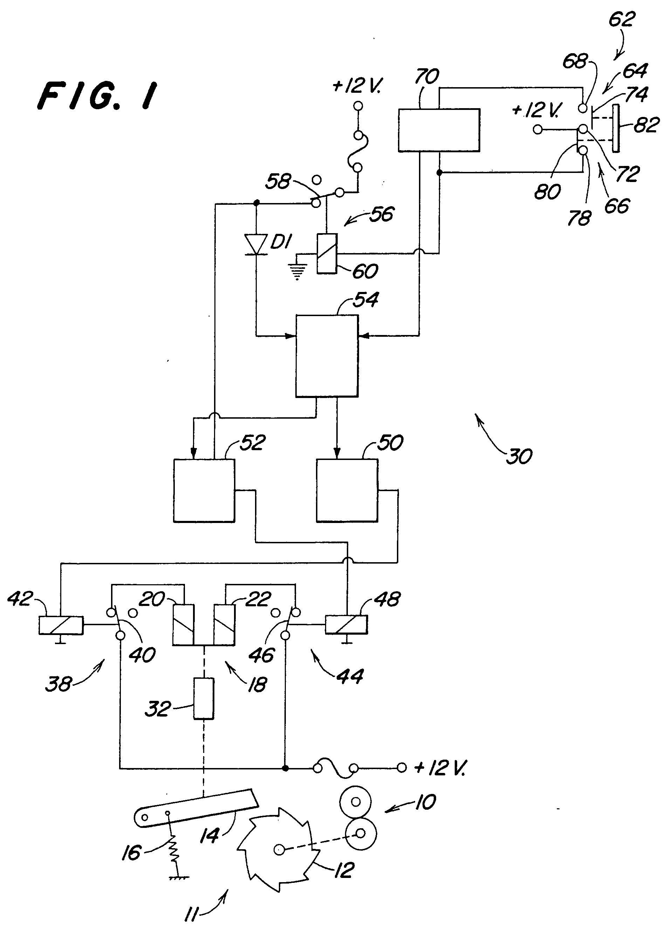

Der Betrieb des Systems läuft folgendermaßen. Wenn die Stromversorgung des Systems an ist und die Schalter und Relais der Figur 1 in den dort dargestellten Positionen sind, wird die Sperrklinke 14 vom Ratschenrad 12 weggehalten und der Zuführwalze 10 ist es möglich, sich zu drehen. Wenn der Bediener das Schaltelement 82 niederdrückt, wird dadurch gleichzeitig der normalerweise offene Schalter 64 geschlossen und der normalerweise geschlossene Schalter 66 geöffnet. Das Schließen des normalerweise offenen Schalters 64 bewirkt, dass die Schalterstatusüberwachungseinheit 70 und die Steuereinheit 54, die den Algorithmus 100 bzw. 200 ausführen, die Treibereinheiten 50 und 52 abschalten, wobei die Relaisspulen 42 und 48 abschalten, wodurch der Elektromagnet 18 abgeschaltet wird, so dass die Sperrklinke 14 in das Ratschenrad 12 eingreifen und die Zuführwalze 10 anhalten wird.

Gleichzeitig trennt das Öffnen des normalerweise geschlossenen Schalters 66 die Spule 60 des Schnellstopprelais 56 von der +12 Volt-Spannungsquelle, was dazu führt, dass das Relais 56 öffnet, wodurch die Treibereinheit 52 von der +12 Volt-Spannungsquelle getrennt wird. Gleichzeitig schaltet die Steuereinheit 54 beide Treibereinheiten 50 und 52 ab. Dadurch werden die Relaisspulen 42 und 48 ebenfalls abgeschaltet, was den Elektromagneten 18 stromfrei schaltet, so dass die Sperrklinke 14 in das Ratschenrad eingreifen und die Zuführwalze 10 anhalten wird.

Wenn somit eine Unterbrechung in den zum normalerweise offenen Schalter 64 führenden Drähten vorliegt, wird die Öffnung des normalerweise geschlossenen Schalters 66 trotzdem noch die Zuführwalze 10 zum Anhalten bringen. Wenn sich analog ein Kurzschluss mit der Betätigung des normalerweise geschlossenen Schalters 66 überlagert, wird das Schließen des normalerweise offenen Schalters 64 trotzdem noch die Zuführwalze 10 zum Anhalten bringen.

### Auflistung der Schritte in den Figuren 2 und 3

- 102: Anfang
- 104: Ist der normalerweise offene Schalter 64 offen?
- 106: Übertrage Schnellstoppbotschaft an 54
- 108: Zeitverzögerung um 50 ms
- 110: Ist der normalerweise geschlossene Schalter 66 offen?
- 112: Übertrage Schnellstoppschalterfehlercode
- 114: Ist der normalerweise geschlossene Schalter 66 offen?
- 116: Übertrage Schnellstoppbotschaft
- 118: Zeitverzögerung um 50 ms
- 120: Ist der normalerweise offene Schalter 64 offen?
- 122: Übertrage Schnellstoppschalterfehlercode
- 124: Rücksprung

- 202: Anfang
- 204: Wurde eine Schnellstoppbotschaft empfangen?
- 206: Schalte Sperrklinkenelektromagnet aus und setze "Schnellstopp"-Modus
- 208: Zeigt Leistungsstatussignal des Schnellstopps an, dass die Stromversorgung aus ist?
- 210: Übertrage Schnellstoppstromversorgungsfehlercode
- 212: Zeigt Leistungsstatussignal des Schnellstopps an, dass die Stromversorgung aus ist?
- 214: Schalte Sperrklinkenelektromagnet aus und setze "Schnellstopp"-Modus
- 216: Zeitverzögerung um 50 ms
- 218: Wurde Schnellstoppbotschaft empfangen?
- 220: Übertrage Schnellstoppkommunikationsfehlerinformationscode
- 222: Rücksprung

## Patentansprüche

1. Schnellstoppschaltkreis (30) für einen elektrisch gesteuerten Schnellstoppmechanismus (11), mit
einem Aktor des Schnellstoppmechanismus (11), der elektrisch zwischen einer Schnellstoppposition und einer Betriebsposition bewegbar ist,
einem vorzugsweise manuell zwischen einer Ruheposition und einer Schnellstoppposition verbringbaren ersten Schalter (66) und einem zweiten Schalter (58, 64), der abhängig vom Zustand des ersten Schalters (66) zwischen einer Ruheposition und einer Schnellstoppposition verbringbar ist,
wobei der Schnellstoppschaltkreis (30) zur Steuerung des Aktors eingerichtet ist und den Aktor in die Schnellstoppposition verbringt als Reaktion auf einen Übergang des ersten Schalters (66) in die Schnellstoppposition und als Reaktion auf einen Übergang des zweiten Schalters (58, 64) in die Schnellstoppposition.

2. Schnellstoppschaltkreis nach Anspruch 1, wobei der zweite Schalter (58) durch eine Relaisspule (60) oder ein elektronisches Relais schaltbar ist, die oder das durch den ersten Schalter (66) gesteuert wird.

3. Schnellstoppschaltkreis nach Anspruch 1, wobei der erste Schalter (66) und der zweite Schalter (64) durch ein gemeinsames Schaltelement (82) gleichzeitig manuell betätigbar sind.

4. Schnellstoppschaltkreis nach Anspruch 2, wobei der erste Schalter (66) und ein dritter Schalter (64) durch ein gemeinsames Schaltelement (82) gleichzeitig manuell betätigbar sind, und der dritte Schalter (64) ebenfalls den Aktor steuert.

5. Schnellstoppschaltkreis nach einem der Ansprüche 1 bis 4, wobei eine zur Steuerung des Aktors eingerichtete Steuereinheit (54) mit einer Information über den Status des ersten Schalters (66) und/oder des zweiten und/oder dritten Schalters (58, 64) beaufschlagt wird.

6. Schnellstoppschaltkreis nach einem der Ansprüche 1 bis 5, wobei der Aktor durch mindestens ein von einer Steuereinheit (54) gesteuertes Relais (42, 48) geschaltet wird.

7. Schnellstoppschaltkreis nach Anspruch 6, wobei eine durch die Steuereinheit (54) gesteuerter Treibereinheit (50, 52) das Relais (42, 48) steuert.

8. Schnellstoppschaltkreis nach Anspruch 6 oder 7, wobei der zweite Schalter (58) die Stromversorgung der Treibereinheit (50, 52) und/oder des Relais (42, 48) steuert.

9. Schnellstoppkreis nach Anspruch 8, wobei die Steuereinheit (54) die Stellung des zweiten Schalters (58) überwacht und den Aktor ggf. in die Schnellstoppposition verbringt.

10. Schnellstoppschaltkreis nach einem der Ansprüche 1 bis 9, wobei der Aktor in der Schnellstoppposition stromlos geschaltet wird und mit elektrischer Energie beaufschlagt wird, um den Schnellstoppmechanismus (11) aus der Schnellstoppposition heraus zu bringen.

11. Landwirtschaftliches Fahrzeug mit einem Schnellstoppmechanismus (11) und einem Schnellstoppschaltkreis (30) nach einem der Ansprüche 1 bis 10.
